# EUROPÄISCHE PATENTSCHRIFT

(11) **EP 1 744 076 B1**
(45) Veröffentlichungstag und Bekanntmachung des Hinweises auf die Patenterteilung: **16.12.2009**
(21) Anmeldenummer: 06007187.5
(22) Anmeldetag: 05.04.2006
(51) Int. Cl.: F16D 65/14, F16D 23/12

(54) **Wipphebelaktor, insbesondere zur Betätigung einer Kupplung**
Rocking lever actuator, in particular for actuating a clutch
Dispositif de commande avec un levier balancant, en particulier pour un embrayage

(30) Priorität: 28.04.2005 DE 102005019792
(43) Veröffentlichungstag der Anmeldung: 17.01.2007
(73) Patentinhaber: LuK Lamellen und Kupplungsbau Beteiligungs KG, 77815 Bühl (DE)
(72) Erfinder: Ahnert, Gerd, 77880 Sasbach (DE); Burkhart, Dirk, 77815 Bühl (DE); Scheufler, Christian, Dr., 77815 Bühl (DE); Dreher, Alexander, 76547 Sinzheim (DE); Baehr, Markus, Dr., 77855 Achern (DE)

(56) Entgegenhaltungen:
- EP-A1- 1 455 106
- WO-A1-01/44677
- WO-A2-03/016745
- GB-A- 2 205 369

## Beschreibung

Die vorliegende Erfindung betrifft einen Wipphebelaktor zur Betätigung einer Kupplung eines Fahrzeuges gemäß dem Oberbegriff des Patentanspruchs 1.

Bisher wurden Kupplungen beispielsweise mittels eines Hebels betätigt, der eine unveränderliche Hebellänge besitzt und beispielsweise mittels eines elektromotorischen Antriebs zum Öffnen und/oder Schließen der Kupplung angetrieben werden konnte. Wenn nun über den Verfahrweg der Kupplungsbetätigung eine veränderliche Betätigungskraft aufgebracht werden musste, so wurde zu diesem Zweck der Elektromotor, um ein entsprechend hohes Moment zur Verfügung zu stellen, mit entsprechenden Stromwerten beaufschlagt.

Um nun diese Problematik zu umgehen, wurde von der Anmelderin ein unter der DE 10 2004 009 832 A1 beschriebenes Hebelsystem zum Betätigen von Kupplungen geschaffen. Das dort beschriebene Hebelsystem weist Hebelarme mit veränderbaren Hebellängen auf, wobei zu diesem Zweck der den Hebel abstützende Hebeldrehpunkt entlang des Betätigungshebels verlagert werden kann und sich somit bei einem unveränderlichen Krafteinleitungspunkt in den Hebel in Abhängigkeit von der Verlagerung des Hebeldrehpunkts verschiedene wirksame Hebellängen ergeben. Obwohl ein solches Hebelsystem bereits vielfache Vorteile gegenüber bekannten Kupplungsbetätigungsvorrichtungen aufweist, lässt es trotzdem Raum für deutliche Verbesserungen.

Das nach der oben genannten Offenlegungsschrift bekannte Hebelsystem wird an dem Krafteinleitungspunkt der Betätigungskraft in den Hebel mit einer vorbestimmbaren Kraft, der Lastfederkraft beaufschlagt. Ausgangsseitig, d. h. also beispielsweise auf der Seite eines Axiallagers wirkt eine entsprechende, zur in den Betätigungshebel eingeleiteten Lastfederkraft komplementäre Reaktionskraft, auch Einrückkraft genannt. Anstelle eines einzelnen Betätigungshebels kann beispielsweise auch eine Vielzahl von um das Axiallager radial sternförmig verlaufenden gleichartigen Betätigungshebeln vorgesehen werden.

Der Hebeldrehpunkt für den Betätigungshebel ist in Form einer Stützrolle oder durch mehrere Rollen gebildet. Diese Stützrolle wird mittels eines elektromotorischen Antriebs verlagert, um die Länge der beiden sich ergebenden Hebelarme am Betätigungshebel zu verändern. Zur Ansteuerung des elektromotorischen Antriebs ist einer Referenzierung oder auch Nullpunktbestimmung genannt, erforderlich.

Im Stand der Technik werden für elektromotorische Antriebe mit Inkrementalwegmessung zur Referenzierung ganz allgemein die folgenden Möglichkeiten vorgeschlagen.

Vorsehen und Anbringen eines Sensors, etwa eine Näherungsschalters, zur Bestimmung des Referenzpunktes bzw. Nullpunktes. Für diesen Sensor muss Bauraum zur Verfügung gestellt werden und die Montage und Justierung ist mit zusätzlichen Kosten verbunden.

Eine Alternative hierzu ist das Vorsehen eines Rastbolzens, der federbelastet an einem bestimmten Punkt des Verfahrweges angeordnet ist. Die Ansteuerung des Elektromotors registriert die Unstetigkeit im Bewegungsverhalten des angetriebenen Elements und erkennt auf diese Art und Weise den Referenzpunkt. Auch hier muss Bauraum für den Rastbolzen vorgesehen werden, sowie durch diese Alternative auch zusätzlicher Montageaufwand und Kosten entstehen.

Schließlich gibt es eine Möglichkeit der Referenzierung, die ausgeführt wird, indem die bekannten Enden bzw. Anschläge des Bewegungsbereiches angefahren werden und eine dieser Anschlagpositionen als Startpunkt der Inkrementalwegmessung genutzt wird. Bei dieser Art der Referenzierung ist jedoch eine so genannte Referenzfahrt erforderlich, die zeitaufwendig ist und eine komplexe Steuerung erfordert.

Es ist daher die erste Aufgabe der vorliegenden Erfindung, bei einem Wipphebelaktor, der insbesondere zur Betätigung einer Kupplung eines Fahrzeuges vorgesehen ist und der über mindestens einen, eine veränderliche Betätigungskraft zum Öffnen und/oder Schließen der Kupplung ausübenden Betätigungshebel verfügt, eine Referenzpunktbestimmung mit möglichst geringem Aufwand zu realisieren.

Diese erste Aufgabe wird gelöst durch einen Wipphebelaktor mit den Merkmalen des Patentanspruchs 1.

Demnach zeichnet sich der erfindungsgemäße Wipphebelaktor, der insbesondere zur Betätigung einer Kupplung eines Fahrzeuges, mit mindestens einem, eine veränderliche Betätigungskraft zum Öffnen und/oder Schließen der Kupplung ausübenden Betätigungshebel versehen ist, der mittels einer Feder beaufschlagbar ist, wobei ein Hebeldrehpunkt des Betätigungshebels mittels eines Elektromotors verlagerbar ist, dadurch aus, dass der Betätigungshebel an einer mit dem Hebeldrehpunkt in Berührung stehenden Oberfläche eine Wippkurvenkontur derart aufweist, dass bei Nichtbestromung des Elektromotors eine automatische Rückstellung des Hebeldrehpunktes in eine Referenzposition bewirkt wird.

Die Vorteile dieser Lösung liegen auf der Hand: die Referenzierung erfolgt automatisch durch die Rücktriebsbewegung der Kupplungsaktorik. Der Elektromotor muss nicht genutzt werden. Ganz im Gegenteil, bei einem Ausfall des Elektromotors infolge beispielsweise eines Steuergeräteausfalls oder Bordnetzausfalls, wird sich die Kupplung öffnen und der Aktor in die Referenzposition zurück verlagert. Bei einer anschließenden Wiederinbetriebnahme steht der Aktor bereits in der Referenzposition und eine Referenzfahrt - wie im oben erwähnten Stand der Technik erforderlich - muss nicht mehr ausgeführt werden.

Diese Art der Referenzierung mittels des erfindungsgemäßen Wipphebelaktors ist in einer Ausnahmesituation außerordentlich effektiv, da bei einer entsprechend ausgebildeten Notstrategie die Kupplung öffnet und mittels der Wippkurvenkontur der nicht selbsthemmend ausgebildete Aktor eine automatische Rückstellung in die Nullposition erfährt.

Besonders vorteilhaft ist es, wenn die Wippkurvenkontur derart ausgebildet ist, dass im Bereich der Referenzposition eine höhere Rücktriebskraft auf eine Stützrolle, die den Hebeldrehpunkt definiert, ausgeübt wird, um eine sichere Positionierung in der Referenzposition zu erreichen. Im restlichen Bereich der Stützrollenverlagerung kann eine dazu vergleichsweise geringe Rücktriebskraft durch entsprechend flache Ausbildung der Wippkurvenkontur vorgesehen werden.

Ein weiteres Problem bei herkömmlichen Wipphebelaktoren besteht darin, dass infolge des Funktionsprinzips eines Wipphebelaktors eine vorgespannte Lastfeder auf einen Betätigungshebel einwirkt. Entsprechend der Position einer Stützrolle ergibt sich eine Übersetzung (Hebellängen links und rechts vom Hebeldrehpunkt), die eine zugehörige Kraft auf ein Einrücklager der Kupplung bewirkt.

Wirkt nun keine Gegenkraft durch das Einrücklager auf den Betätigungshebel, so schwenkt dieser unter Umständen so weit, dass die Kraftwinkelrichtung an der Wippkurve wechselt. Die Folge ist, dass auf ein Rollensystem, welches die Stützrolle(n) führt, eine Triebkraft entgegen der beabsichtigten Rücktriebsrichtung wirkt. In der Regel ist der mögliche Schwenkwinkel des Betätigungshebels so groß und der vorhandene Flankenwinkel der Wippkurve im Bereich der Ausgangslage der Stützrollen so klein, dass dieser Fall eintritt.

Ist der Wipphebelaktor nicht selbsthemmend ausgebildet, so bewegt sich das Rollensystem unter Umständen unbeabsichtigt in die entsprechende Endlage. Für die Montage/Demontage des Kupplungssystems wären die folgenden Konsequenzen gegeben: durch das Hebelverhältnis - in der vorderen Endlage der Stützrollen - wirkt eine sehr hohe Kraft am Hebelende. Diese Kraft wirkt in Montage-/Demontagerichtung zwischen Kupplung und Aktor und führt u. U. zu erheblichen Problemen, wie hoher Montagekraft oder gar einer Personengefährdung; ist der Aktor nicht mit der Kupplung verbaut, so muss unbeabsichtigtes Bewegen der Stützrollen und des Betätigungshebels verhindert werden (Gefahrenpotential); und beim Schwenken des Betätigungshebels kann eine erhebliche Kraft zur Bewegung der Stützrollen entstehen. Wenn nun eine unkontrollierte Bewegung der Stützrollen eintritt (nicht selbsthemmend), so ist eine hohe Geschwindigkeit und demzufolge eine erheblicher Stoß in der Endlage des Aktorantriebs zu befürchten.

Der vorliegende Wipphebelaktor zur Betätigung einer Kupplung eines Fahrzeuges ist vorteilhafterweise derart weiterzubilden, dass bei fehlender Gegenkraft aus dem Einrücklager der Kupplung kein Gefahrenpotential entsteht. Die wird erreicht durch einen Wipphebelaktor mit den Merkmalen des Patentanspruchs 5.

Demnach zeichnet sich der vorliegende Wipphebelaktor dadurch aus, dass der Betätigungshebel mit einer Montage- und/oder Transportsicherungseinrichtung versehen ist, so dass der Betätigungshebel ohne die Gegenkraft (FKu) von der Kupplung fixiert und damit nicht verschwenkbar festgelegt ist.

Vorteilhafterweise wird dabei der Betätigungshebel selbst oder ein benachbartes, kinematische direkt mit dem Betätigungshebel zusammen wirkendes Bauteil des Wipphebelaktors derart fixiert, dass eine unbeabsichtigte Verschwenkung des Betätigungshebels nicht mehr möglich ist.

Die vorstehende Aufgaben, die Merkmale und Vorteile nach der vorliegenden Erfindung können unter Berücksichtigung der folgenden, detaillierten Beschreibung der bevorzugten Ausführungsformen der vorliegenden Erfindung und unter Bezugnahme auf die zugehörigen Zeichnungen besser verstanden werden.

In den Zeichnungen ist in der
- Figur 1: eine Querschnittansicht eines erfindungsgemäßen Wipphebelaktors dargestellt, wobei sich der Wipphebelaktor in einer Betätigungsposition befindet und die Ausbildung einer Rücktriebskraft an einer Stützrolle durch die Ausbildung einer entsprechenden Wippkurvenkontur gezeigt ist;
- Figur 2: eine Querschnittansicht des erfindungsgemäßen Wipphebelaktors nach der Figur 1 gezeigt, wobei hier der Wipphebelaktor in der Referenzposition angeordnet ist;
- Figur 3: ein Kraft-Weg-Diagramm gezeigt, in dem die Rückstellkraft FR an der Stützrolle über dem Verfahrweg SR dargestellt ist;
- Figur 4: ein Wipphebelaktor gezeigt, der keine Montage- oder Transportsicherung aufweist;
- Figur 5: ein erfindungsgemäßer Wipphebelaktor nach einer weiteren bevorzugten Ausführungsform dargestellt, der eine Montage- und/oder Transportsicherung in Form einer Sperre aufweist;
- Figur 6: ein erfindungsgemäßer Wipphebelaktor nach einer weiteren bevorzugten Ausführungsform dargestellt, der eine Montage- und/oder Transportsicherung in Form eines Anschlages aufweist;
- Figur 7: ein erfindungsgemäßer Wipphebelaktor nach einer weiteren bevorzugten Ausführungsform dargestellt, der eine Montage- und/oder Transportsicherung derart aufweist, dass eine Stützrolle des Betätigungshebels außerhalb des eigentlichen Arbeitsbereichs positioniert wird;
- Figur 8: ein erfindungsgemäßer Wipphebelaktor nach einer weiteren bevorzugten Ausführungsform dargestellt, der eine Montage- und/oder Transportsicherung in Form eines Sperrelementes aufweist; und
- Figur 9: ein erfindungsgemäßer Wipphebelaktor nach einer weiteren bevorzugten Ausführungsform dargestellt, der eine Montage- und/oder Transportsicherung in Form einer Verrastung aufweist.

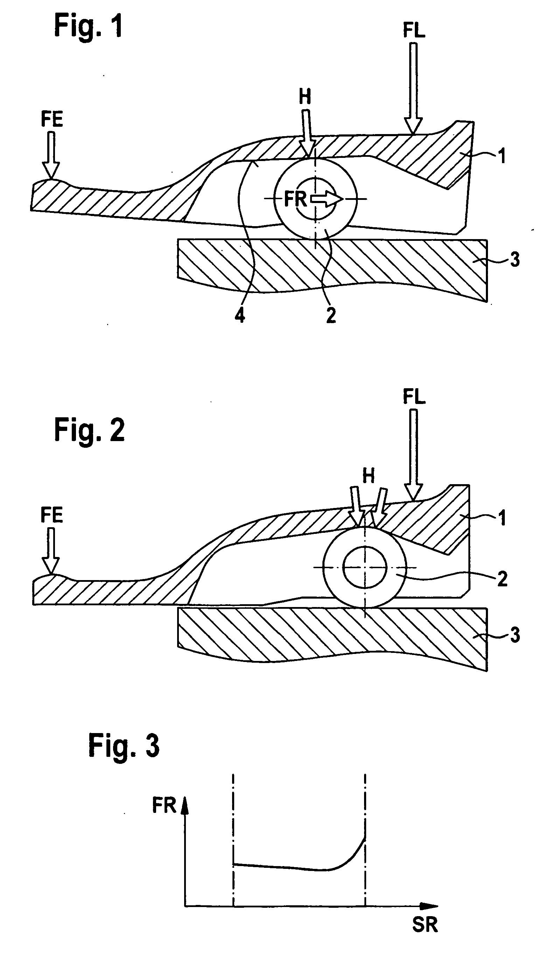

Der erfindungsgemäße Wipphebelaktor, wie er zum Beispiel als Teil einer Kupplungsaktorik Verwendung findet oder auch bei einer Getriebebremse einsetzbar wäre, wird in der gezeigten bevorzugten Ausführungsform nach den Figuren 1 und 2 derart eingebaut, dass eine Kupplung (nicht dargestellt) mittels eines Betätigungshebels 1 zugedrückt wird. Die Betätigungskraft bzw. Einrückkraft FE ist in Form eines Pfeils am linken Ende des Betätigungshebels 1 eingezeichnet. Durch Verschwenken des Betätigungshebels 1 um einen Hebeldrehpunkt H im Uhrzeigersinn würde die nicht dargestellte Kupplung geschlossen werden.

Die Kupplung ist derart aufgebaut, dass bei einer Nichtbestromung eines Elektromotors (nicht dargestellt), der zum Antrieb einer Stützrolle 2 vorgesehen ist, die Kupplung selbständig öffnet und der Betätigungshebel 1 in Richtung des Pfeils FE verschwenkt. Diese so genannte Notstrategie, die die Kupplung bei einem Stromausfall öffnet, ist vorgesehen, um den Kraftfluss von einem Verbrennungsmotor über die Kupplung und ein Getriebe an die Antriebsräder zu unterbrechen.

Deshalb ist diese Kupplungsaktorik auch mit einem nicht selbsthemmenden Getriebe versehen, was dazu führt, dass bei einer Nichtbestromung des Elektromotors die Stützrolle 2 infolge einer entsprechend gestalteten Wippkurvenkontur 4 in eine exakt definierte Referenzposition verfährt. Der Elektromotor ist vorgesehen, um die Stützrolle 2 nach der Ausführungsform in den Figuren 1 und 2 derart anzutreiben, dass diese von rechts nach links verlagert wird und damit der Hebeldrehpunkt H entsprechend mit verlagert wird. Die Stützrolle 2 stützt sich dabei an einer Grundplatte 3 ab.

In der Figur 3 ist in dem Diagramm der mögliche Verfahrweg SR der Stützrolle 2 durch die gestrichelten Linien eingezeichnet. Eine Lastfeder, die am rechten Ende des Betätigungshebels 1 eine Federkraft FL in den Betätigungshebel 1 einleitet, erzeugt am linken Ende des Betätigungshebels 1 eine über die beiden Hebelarme - jeweils mit der Längenerstreckung zwischen H und FL und zwischen H und FE - definierte Hebelkraft, die der Einrückkraft FE entgegenwirkt. Sobald diese Hebelkraft größer ist als die Einrückkraft FE, wird die Kupplung geschlossen. Da die eingeleitete Federkraft FL konstant ist, wird die Hebelkraft durch Verlagerung des Hebeldrehpunktes bzw. der Stützrolle 2 in der Höhe verändert, indem die Hebelübersetzung verändert wird bzw. die Hebelarmlängen verändert werden.

Der Elektromotor treibt also die Stützrolle 2 aus der in der Figur 2 gezeigten Lage an und verlagert die Stützrolle 2, die im übrigen auch aus einer Doppelrolle oder mehreren Rollen bestehen kann, nach links in den Figuren. Durch die Verlagerung der Stützrolle 2 wird das Verhältnis (Länge) der beiden Hebelarme am Betätigungshebel 1 geändert. In der Figur 1 ist beispielsweise die Betätigungsposition der Kupplung dargestellt. Die eingeleitete Federkraft FL ist mittels der Hebelübersetzung ausreichend groß, um die Einrückkraft FE zu überwinden und die Kupplung zu schließen. Der Hebeldrehpunkt liegt dann bei H.

Die Wippkurvenkontur 4 ist erfindungsgemäß so gewählt, dass bei einer Nichtbestromung des Elektromotors und infolge der Einrückkraft FE eine geringe Rückstellkraft oder Rollenrücktriebskraft FR an der Stützrolle 2 einwirkt, die diese Stützrolle 2 nach rechts in eine Referenzposition verfährt.

Die Wippkurvenkontur 4 muss so gestaltet sein, dass in der Referenzposition eine stabile Anlage der Stützrolle 2 erreicht wird. Dieser Sachverhalt ist in der Figur 2 durch die beiden Pfeile bei H angedeutet. An den beiden Pfeilen verlaufen die Oberflächen der Wippkurvenkontur 4 tangential zu der Oberfläche der Stützrolle 2 im jeweiligen Berührungspunkt. Es tritt ein Kräftegleichgewicht ein, welches die Stützrolle 2 an dieser Position positioniert und hält.

Durch die Ausbildung bzw. Gestaltung der Wippkurvenkontur 4 lässt sich der Betrag der Rücktriebskraft FR einstellen. Im Bereich der Referenzposition ist es wünschenswert, dass die Rücktriebskraft FR etwas größer ist als im restlichen Verfahrbereich der Stützrolle 2, um eine sichere und dauerhaft wiederholbare Positionierung im Referenz- oder Nullpunkt zu gewährleisten.

Gleichzeitig hat eine flache Wippkurvenkontur 4 den Vorteil, dass eine geringe Rückstellkraft FR erzeugt wird und damit bei einem aktiven Antreiben der Stützrolle 2 gegen die Wippkurvenkontur 4 eine geringere Belastung des Elektromotors einhergeht. Der Elektromotor kann daher schwächer, kleiner und kostengünstiger ausgelegt werden. Für den normalen Aktorbetrieb wird immer nur eine Bewegungsrichtung aktiv genutzt, d. h., dass eine Kopplung zwischen dem Elektromotor und der Stützrolle 2 bzw. einer Verschiebeeinheit der Stützrollen nur in einer Kraftrichtung belastet wird. Dementsprechend kann diese Kopplung als eine einfache steckbare Verbindung ausgebildet werden. Eine einfache Montage einer solchen steckbaren Verbindung ist die positive Folge.

Bei der zeichnerisch dargestellten Ausführungsform ist zur Ausbildung des Hebeldrehpunkts H des Betätigungshebels 1 eine Stützrolle 2 vorgesehen. Selbstverständlich können Mehrfachrollen oder gleich wirkende Einrichtungen anstelle der Stützrolle 2 vorgesehen werden.

Die erfindungsgemäße Art der Referenzierung ist einfach im Aufbau und einfach in der Ansteuerung. Sowohl die gezielte Stromabschaltung am Elektromotor als auch die Nichtbestromung des Elektromotors im Ausnahmefall führt dazu, dass der Wipphebelaktor automatisch in die Referenzposition verfährt und bei einer darauf folgenden Inbetriebnahme oder Wiederinbetriebnahme des Kupplungsaktors eine Referenzierung bzw. ein Nullpunktabgleich vorliegt.

Da für eine Inkrementalwegmessung (Wegmessung durch Schrittzählung) eine Bestimmung der Startposition erforderlich ist, kann, wie im vorliegenden Fall, wenn der nicht selbsthemmende Kupplungsaktor ohne Antrieb eine bestimmte und bekannte Position selbsttätig einnimmt, diese Position als Referenzposition genutzt werden.

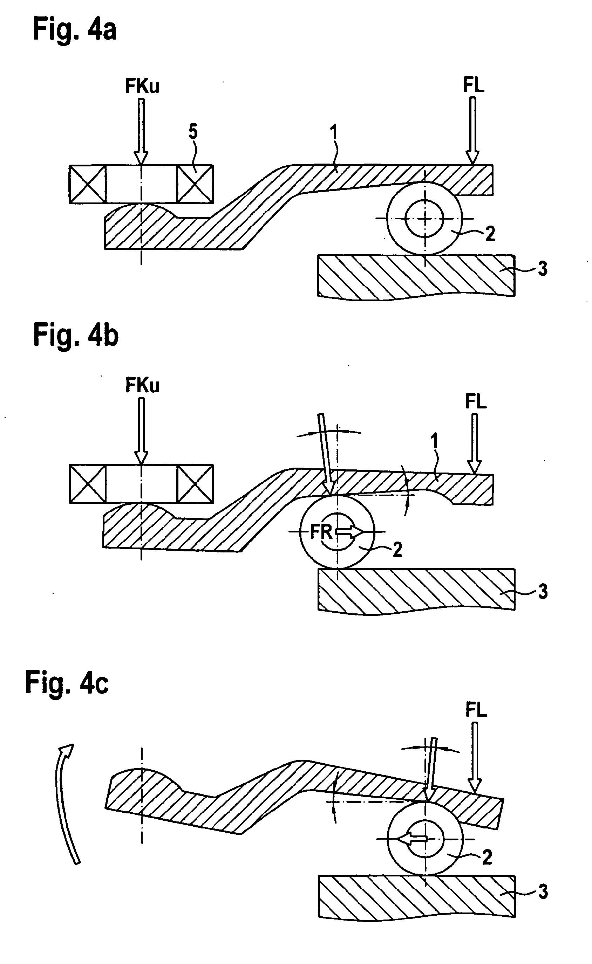

Die erfindungsgemäße Montage-/Transportsicherungseinrichtung bei einem Wipphebelaktor wird im Folgenden anhand der Figuren 4 bis 9 beschrieben.

In der Figur 4 ist das Funktionsprinzip eines Wipphebelaktors dargestellt, wobei eine vorgespannte Lastfeder auf einen Betätigungshebel 1 einwirkt und dort die Kraft FL erzeugt. Entsprechend der Position einer Stützrolle 2 ergibt sich eine Übersetzung (Hebellängen links und rechts vom Hebeldrehpunkt), die eine zugehörige Kraft FKu auf ein Einrücklager 5 der Kupplung bewirkt. Dieser Sachverhalt ist in der Figur 4a) gezeigt. Die Stützrolle 2 kann zwischen den Positionen verfahren, die in den Figuren 4a) und 4b) dargestellt sind.

Wirkt nun keine Gegenkraft durch das Einrücklager 5 auf den Betätigungshebel 1, wie in der Figur 4c) gezeigt, so schwenkt dieser unter Umständen in Pfeilrichtung so weit, dass die Kraftwinkelrichtung (angedeutet durch die kleinen Winkelpfeile) an der Wippkurve wechselt.

Die Folge ist, dass auf ein Rollensystem, welches die Stützrolle(n) 2 führt, eine Triebkraft entgegen der beabsichtigten Rücktriebsrichtung wirkt. In der Regel ist der mögliche Schwenkwinkel des Betätigungshebels 1 so groß und der vorhandene Flankenwinkel der Wippkurve im Bereich der Ausgangslage der Stützrollen 2 so klein, dass dieser Fall eintritt.

Ist der Wipphebelaktor nicht selbsthemmend ausgebildet, so bewegt sich das Rollensystem unter Umständen unbeabsichtigt in die entsprechende Endlage. Wenn nun eine unkontrollierte Bewegung der Stützrollen 2 eintritt (nicht selbsthemmend), so ist eine hohe Geschwindigkeit und demzufolge eine erheblicher Stoß in der Endlage des Aktorantriebs zu befürchten.

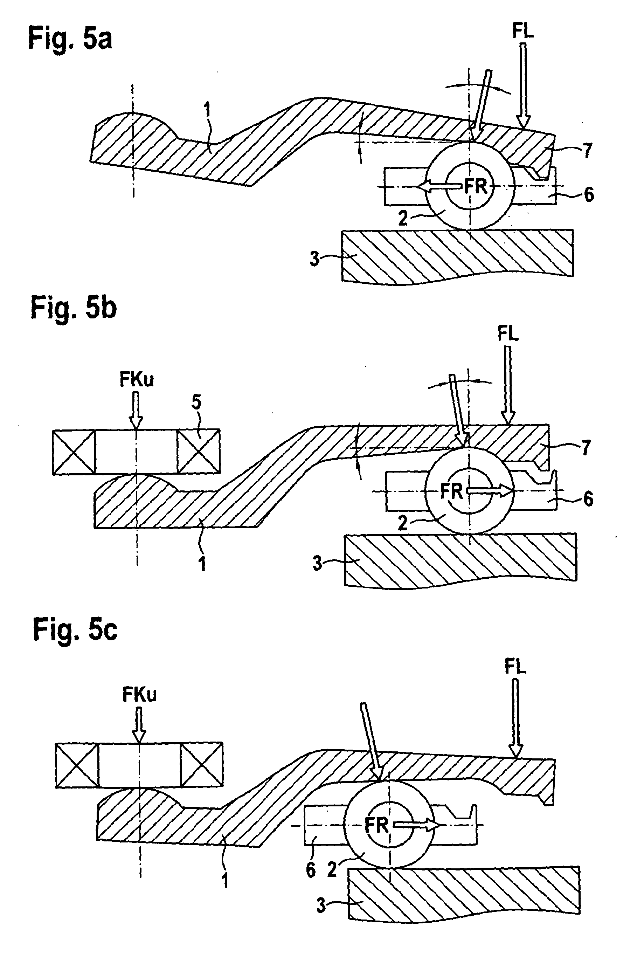

Die unbeabsichtigte Verlagerung des Rollensystems 6 bzw. der Stützrolle 2 kann nach der Erfindung automatisch und mit unterschiedlichen Ausführungsformen verhindert werden. In der Figur 5 ist eine solche Ausführungsform dargestellt.

In der Figur 5a) ist der Betätigungshebel 1 mittels einer Sperre 7 derart verriegelt, dass ein Verschwenken um den Hebeldrehpunkt, der durch den Berührungspunkt zwischen der Stützrolle 2 und der Wippkurve definiert wird, nicht mehr möglich ist. In der Figur 5b) ist der Zustand gezeigt, wenn die Sperre 7 geöffnet ist und der Betätigungshebel 1 sich in der Einbaulage befindet und durch das Einrücklager 5 der Kupplung (nicht dargestellt) mit der Kupplungsgegenkraft FKu belastet ist. In der Figur 5c) ist ein Zustand analog der Figur 5b) dargestellt, wobei die Stützrolle 2 bzw. das Rollensystem 6 nach links entlang der Wippkurve verlagert ist. In allen Zuständen lastet die Federkraft FL der Lastfeder auf dem rechten Ende des Betätigungshebels 1.

Genauer betrachtet, verschwenkt der Betätigungshebel 1 ohne die Kupplungsgegenkraft FKu in die Position, die in der Figur 5a) dargestellt ist. Die Federkraft FL der Lastfeder drückt den Betätigungshebel 1 auf der rechten Seite des Hebeldrehpunktes nach unten. Da die Wippkurve dann eine nach links ansteigende Kontur (durch die Winkelpfeile angedeutet) aufweist, würde ohne eine Sicherung das Rollensystem 6 bzw. die Stützrolle 2 nach links laufen. Dies wird durch die erfindungsgemäße Transport- und/oder Montagesicherungseinrichtung verhindert, die bei der vorliegenden Ausführungsform in Form einer Sperre 7 ausgebildet ist. Die Sperre 7 verriegelt das rechte Ende des Betätigungshebels 1 mit dem Rollensystem 6 derart, dass eine Bewegung des Rollensystems 6 und damit der Stützrolle 2 unterbunden ist. Das Rollensystem 6 läuft auf der Grundplatte 3.

Wenn nach der Montage des Kupplungssystems durch die Kupplungsgegenkraft FKu eine Gegenkraft zur Federkraft FL wirkt, wie es in der Figur 5b) dargestellt ist, so wird der Betätigungshebel 1 in seinen Arbeitsbereich geschwenkt und die Sperre 7 öffnet sich zwangsläufig. Dann ist ein ungehindertes Verfahren des Rollensystems 6 möglich, wie es in der Figur 5c) angedeutet ist. In der gezeigten Ausführungsform nach der Figur 5 ist die Wippkurve am Betätigungshebel 1 derart ausgebildet, dass das Rollensystem 6 nach rechts belastet wird, dass heißt, dass im gesamten Arbeits- bzw. Schwenkbereich des Betätigungshebels 1 eine Rücktriebskraft FR auf die Stützrolle(n) 2 wirkt.

Besonders vorteilhaft ist es, wenn bei einem solchen Wipphebelaktor ohne anliegende Kupplungsgegenkraft FKu und für den Fall einer externen Krafteinwirkung, wie etwa einem Anstoßen der Betätigungshebelenden bei der Montage oder Missbrauch, sofern der Betätigungshebel 1 verschwenkt wird, die Sperre 7 erst ab einem solchen Schwenkwinkel aufgehoben wird, bei dem durch den dann gegebenen Wippkurven-Flankenwinkel keine Vortriebskraft auf die Stützrolle 2 ausgeübt wird - ein solcher Flankenwinkel ist in der Figur 5b) eingezeichnet.

Wie es in der Figur 5 gezeigt ist, wird eine Sperre 7 zwischen dem Betätigungshebel 1 und einer Traverse des Rollensystems 6 der Stützrolle 2 vorgesehen. Dafür sind keine zusätzlichen Bauteile erforderlich, sofern ein hakenförmiges Einrasten gewährleistet ist. Alternativ kann sich auch an der Grundplatte 3 ein Sperrmechanismus (nicht dargestellt) befinden, welcher durch den Betätigungshebel 1 betätigt wird.

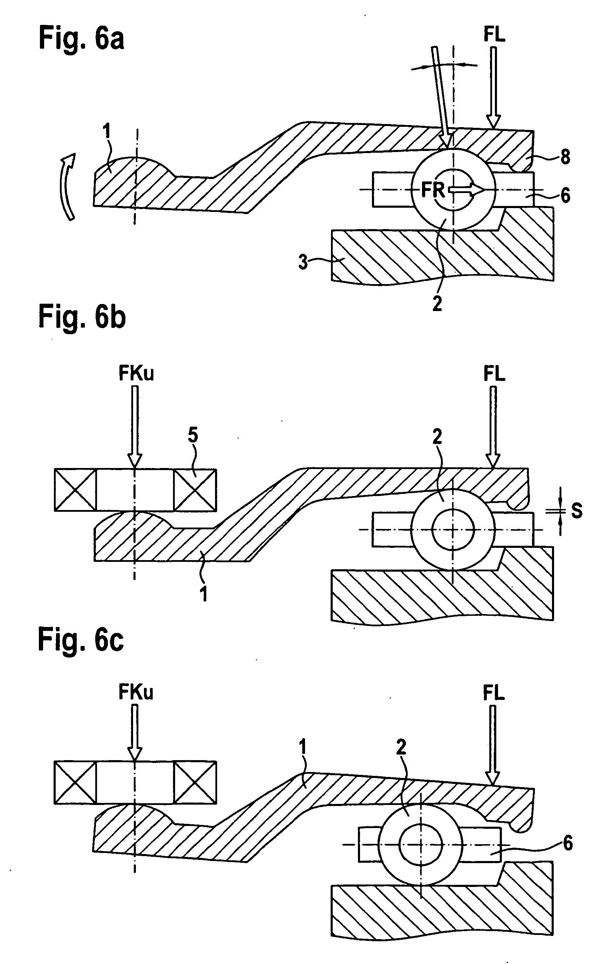

Eine weitere Ausführungsform der erfindungsgemäßen Transport- und/oder Montagesicherungseinrichtung ist in der Figur 6 gezeigt. Dort ist als Sicherung ein Anschlag 8 vorgesehen, der ein (weiteres) Verschwenken des Betätigungshebels 1 in Richtung des Pfeils (links) in der Figur 6a) verhindert. Der generelle Aufbau des Wipphebelaktors ist identisch zu dem nach der Figur 5. In der Figur 6a) ist die Transport- oder Montagestellung gezeigt, d. h., ohne eine wirkende Kupplungsgegenkraft FKu, da das Einrücklager 5 noch nicht gegen das linke Ende des Betätigungshebels 1 anliegt und drückt.

Infolge der Federkraft FL durch die Lastfeder (nicht dargestellt) wird der Betätigungshebel 1 auf der rechten Seite des Hebeldrehpunktes nach unten gedrückt und kommt mit einem nasenförmigen Fortsatz, dem Anschlag 8 auf der Grundplatte 3, die in diesem Bereich eine bestimmte Erhöhung aufweisen kann, zum aufliegen. Infolge der Ausbildung der Wippkurve entsteht eine Rücktriebskraft FR, die das Rollensystem 6 bzw. die Stützrolle 2 nach rechts belastet, so dass eine stabile Lage entsteht, die ein Verschwenken des Betätigungshebels 1 verhindert.

Durch die Verhinderung einer auf die Traverse des Rollensystems 6 einwirkenden Vortriebskraft ist eine Begrenzung des Schwenkwinkels des Betätigungshebels 1 ausgebildet, wobei nach der Montage - siehe Figur 6b) und 6c) - des gesamten Kupplungssystems durch die dann auf den Betätigungshebel 1 am linken Ende einwirkende Kupplungsgegenkraft FKu dieser in seinen Arbeitsbereich geschwenkt ist und der nasenförmige Fortsatz des Anschlages 8 nicht mehr in Kontakt mit der Grundplatte 3 steht. Es liegt dann ein Spalt S zwischen dem Betätigungshebel 1 und der Grundplatte 3 vor, so dass ein ungehindertes Verfahren des Rollensystems 6 möglich ist. Durch aktiven, vorzugsweise elektromotorischen Antrieb der Stützrolle 2 wird der Anschlag 8 zwischen Betätigungshebel 1 und Grundplatte 3 vollständig aufgehoben (siehe Figur 6c), so dass der Betätigungshebel 1 im gesamten Arbeitsbereich ohne Behinderung Verschwenken kann.

In der Figur 6 ist dargestellt, dass der Anschlag am hinteren, rechten Ende ausgebildet ist. Alternativ und nicht dargestellt, lässt sich dieser Anschlag-Mechanismus auch im vorderen Bereich des Betätigungshebels 1 vorsehen, wobei dann eine umgekehrte Kraftrichtung abgestützt werden muss (auf der anderen Seite des Hebeldrehpunktes). Vorteilhaft ist an dieser Alternative, dass unter Umständen keine Verlängerung des Betätigungshebels 1 hinter bzw. über die Referenzposition (Nullpunktposition des Antriebs) hinaus erforderlich ist, so dass sich eine Bauraumersparnis ergibt. Weiterhin ist durch die im vorderen Bereich des Betätigungshebels auftretenden größeren Wege beim Schwenken eine geringere Toleranzempfindlichkeit der Hebelsperre zu verzeichnen.

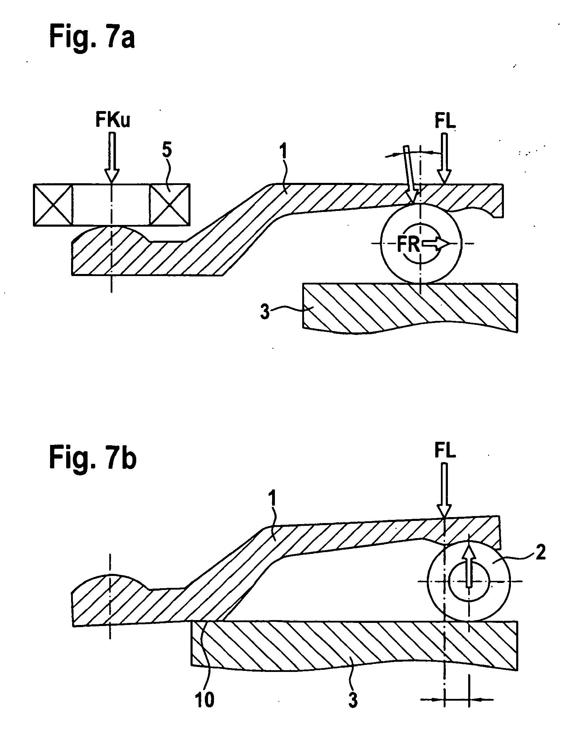

Eine weitere Ausführungsform nach der vorliegenden Erfindung ist in der Figur 7 dargestellt.
In der Figur 7a) ist die Arbeitsstellung des Betätigungshebels 1 dargestellt, wobei ein Einrücklager 5 einer Kupplung eine Kupplungsgegenkraft FKu auf das linke Ende des Betätigungshebels 1 aufbringt, während am rechten Ende des Betätigungshebels 1 die Federkraft FL der Lastfeder einwirkt. Die Stützrolle 2 ist auf der Grundplatte 3 entlang der Wippkurve im Arbeitsbereich verfahrbar; in der Figur 7a) ist die am weitesten rechts mögliche Position entlang der Wippkurve im Arbeitsbereich dargestellt. Die Wippkurve ist dabei derart ausgebildet, dass im gesamten Arbeits- bzw. Verfahrbereich der Stützrolle 2 eine Rücktriebskraft FR auf die Stützrolle(n) 2 wirkt, die eine Verlagerung nach rechts bewirkt. Aktiv kann die Stützrolle 2 mittels eines elektromotorischen Antriebs (nicht dargestellt) nach links verfahren werden und dabei den Betätigungshebel 1 im Uhrzeigersinn um den sich ebenfalls nach links verlagernden Hebeldrehpunkt verschwenken, um die Kupplung beispielsweise zu öffnen.

Wird der Verfahrweg der Stützrolle 2 bzw. Traverse des Rollensystems, welches die Stützrolle 2 hält und führt, derart verlängert, dass die Stützrolle 2 außerhalb der Lastfeder-Wirkungslinie (in der Figur 7b) auf der rechten Seite der gestrichelten Linie, die die Federkraft FL darstellt) positioniert ist, so hat der Betätigungshebel 1 auch ohne eine einwirkende Kupplungsgegenkraft FKu kein Bestreben weiter zu verschwenken. In der Figur 7b) ist die Stützrolle 2 in diese "Parkposition" verfahren, so dass die Federkraft FL links von dem Hebeldrehpunkt auf den Betätigungshebel 1 drückt und sich der Betätigungshebel 1 in einer Ruheposition, auf der Grundplatte 3 an einer Auflage 10 aufliegend, befindet. Die Unterseite bzw. Kontaktseite des Betätigungshebels 1 zur Stützrolle 2 kann dabei in der Form an die Form der Stützrolle 2 angeglichen sein, um eine möglichst stabile Anlage zu schaffen.

Erst wenn eine Kupplungsgegenkraft FKu auf den Betätigungshebel 1 einwirkt und ein aktives Verfahren aus dieser Parkposition heraus, beispielsweise durch Bestromen eines nicht dargestellten elektromotorischen Antriebs der Stützrolle 2, erfolgt, gelangt die Stützrolle 2 wieder in den aktiven Verfahrbereich unter der Wippkurve des Betätigungshebels 1. Ein geringfügiger Nachteil muss bei dieser Ausführungsform bedacht werden, nämlich dass diese Park- oder Transportstellung der Stützrolle 2 von der Referenzposition im Betrieb zu unterscheiden sein muss. Hierzu ist gegebenenfalls ein erhöhter Ansteuerungsbedarf notwendig.

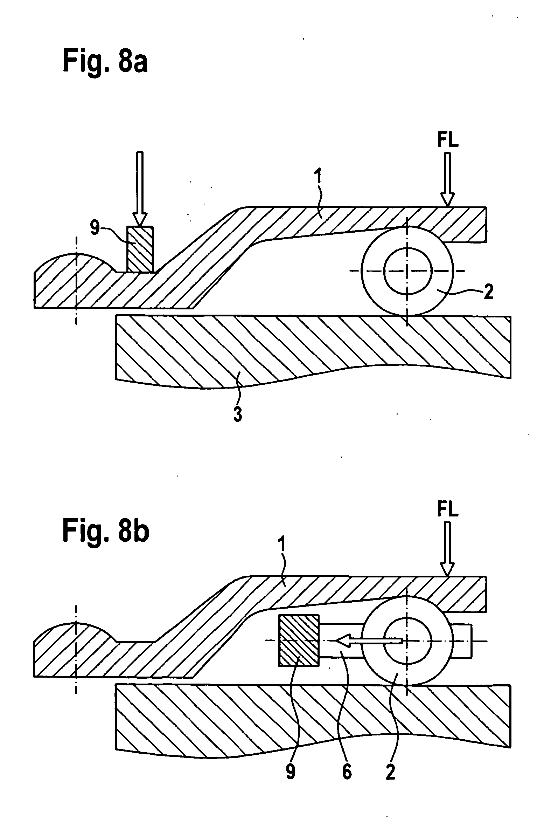

Eine weitere Ausführungsform der erfindungsgemäßen Transport- und/oder Montagesicherungseinrichtung ist in der Figur 8 dargestellt. Bei dieser Ausführungsform wird vorzugsweise ein zusätzliches Sperrelement 9 verwendet, welches ein Verschwenken des Betätigungshebels 1 verhindert, sofern sich dieser in Transportstellung befindet.

In der Figur 8a) ist dieses Sperrelement 9 gegen den Betätigungshebel 1 wirkend eingesetzt bzw. eingebaut, so dass die am rechten Ende des Betätigungshebels 1 einwirkende Federkraft FL der Lastfeder trotz fehlender Kupplungsgegenkraft den Betätigungshebel 1 nicht weiter verschwenken kann. Das Sperrelement 9 bewirkt dabei die Belastung des Betätigungshebels 1 mit einer Kraft FSperre. Eine Bewegung der Stützrolle 2 bzw. der Traverse des Rollensystems ist dann ausgeschlossen. Nach der Montage der Kupplung kann das Sperrelement 9 heraus genommen bzw. demontiert werden und der Betätigungshebel 1 kann im Arbeitsbereich verschwenkt werden.

In der Figur 8b) ist dieses Sperrelement 9 gegen die Traverse des Rollensystems 6 der Stützrolle 2 wirkend eingesetzt, so dass bei beliebiger Lage des Betätigungshebels 1 das Verfahren der Stützrolle 2 sicher verhindert ist. Nach der Montage der Kupplung kann dieses Sperrelement 9 entnommen werden. Auch im Falle der Ausführungsform nach der Figur 8b) ist ein Verschwenken des Betätigungshebels 1 ohne einwirkende Kupplungsgegenkraft aber mit einwirkender Federkraft FL der Lastfeder unterbunden.

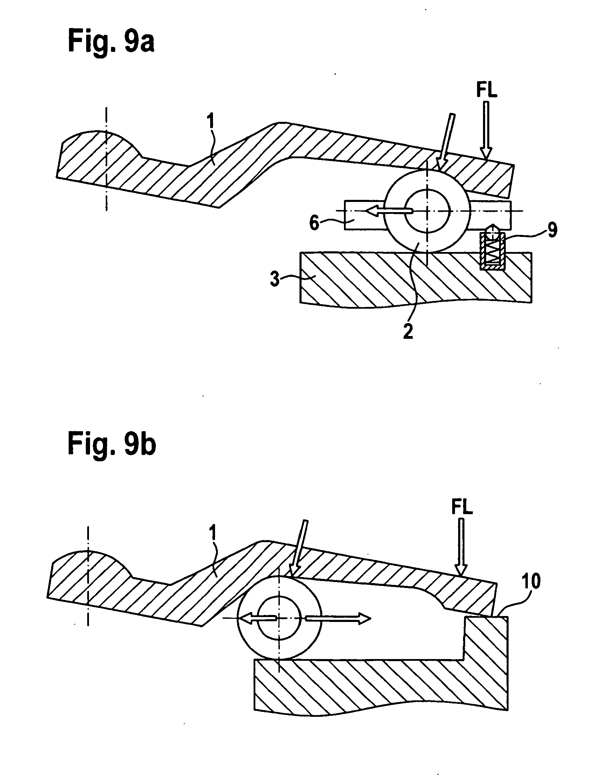

Schließlich sind in der Figur 9 zwei weitere alternative Ausführungsformen nach der vorliegenden Erfindung dargestellt. In der Figur 9a) ist ein Sperrelement 9 in Form einer federbelasteten Rastkugel gezeigt, die in eine entsprechende Vertiefung an der Traverse des Rollensystems 6 eingreift. Bei beliebiger (Schwenk-) Lage des Betätigungshebels 1 und einer anliegenden Federkraft FL der Lastfeder, aber fehlender Kupplungsgegenkraft, ist die Stützrolle 2 fixiert, so dass die Federkraft FL den Betätigungshebel 1 derart belastet, dass eine stabile Montage- bzw. Transportlage eingenommen ist. Erst wenn eine bestimmte Vortriebskraft (siehe Pfeil) durch den elektromotorischen Antrieb (nicht dargestellt), der auf die Stützrolle 2 wirkt, überschritten ist, rastet die Rastkugel des Sperrelements 9 aus der Vertiefung an der Traverse aus und die Stützrolle 2 kann im Arbeitsbereich verfahren.

In der Figur 9b) ist die weitere, letzte Ausführungsform der erfindungsgemäßen Montage- und/oder Transportsicherungseinrichtung gezeigt, wobei dort in der Transport- und Montagelage des Betätigungshebels 1 bzw. der Stützrolle 2 diese sich in der vordersten, linken Position befindet, während bei der Montage und gegen die Kupplungskraft wirkend, die Stützrolle 2 aktiv mittels des elektromotorischen Antriebs nach rechts verfahren wird und bis zum Abschluss der Montage dort gehalten wird. In der Transportlage drückt die Federkraft FL der Lastfeder den Betätigungshebel 1 auf die Auflage 10 der Grundplatte 3 und ein weiteres Verschwenken des Betätigungshebels 1 ist sicher verhindert. Nach dem aktiven Verfahren der Stützrolle 2 in die rechte Position (siehe Pfeil in der Fig. 9b) kann die Kupplung montiert werden und die Kupplungsgegenkraft wirkt am vorderen Ende, links in der Figur 9b, auf den Betätigungshebel 1 ein.

Für den erfindungsgemäßen Wipphebelaktor wird eine Sicherung vorgeschlagen, damit bei nicht vorhandener Kupplungsgegenkraft FKu der Betätigungshebel 1 nicht selbständig nach vorne schwenkt und es zu Schäden oder Gefährdungen kommt.

### Bezugszeichenliste

- 1: Betätigungshebel
- 2: Stützrolle(n)
- 3: Grundplatte
- 4: Wippkurvenkontur
- 5: Einrücklager
- 6: Rollensystem
- 7: Sperre
- 8: Anschlag
- 9: Sperrelement
- 10: Auflage

- FL: Federkraft d. Lastfeder
- FE: Einrückkraft
- FKu: Kupplungsgegenkraft
- FR: Rücktriebskraft
- H: Hebeldrehpunkt,
- S: Spalt
- SR: Weg der Stützrolle

## Patentansprüche

1. Wipphebelaktor zur Betätigung einer Kupplung eines Fahrzeuges mit mindestens einem, eine veränderliche Betätigungskraft zum Öffnen und/oder Schließen der Kupplung ausübenden Betätigungshebel (1), der mittels einer Feder beaufschlagbar ist, wobei ein mittels zumindest einer Stützrolle (2) definierter Hebeldrehpunkt des Betätigungshebels (1) mittels eines Elektromotors verlagerbar ist und der Betätigungshebel (1) eine Wippkurvenkontur (4) aufweist, mit der er im Hebeldrehpunkt mit der Oberfläche der Stützrolle (2) in Berührung steht, **dadurch gekennzeichnet, dass** die Wippkurvenkontur eine Referenzposition aufweist, so dass bei Nichtbestromung des Elektromotors eine automatische Rückstellung des Hebeldrehpunktes in die Referenzposition bewirkt wird.

2. Wipphebelaktor nach Anspruch 1, **dadurch gekennzeichnet, dass** durch die Ausbildung der Wippkurvenkontur (4) eine stabile Positionierung der Stützrolle (2) in der Referenzposition erzeugt wird.

3. Wipphebelaktor nach Anspruch 1 **dadurch gekennzeichnet, dass** durch die Ausbildung der Wippkurvenkontur (4) eine Rücktriebskraft (FR) an der Stützrolle (2) erzeugt wird, die die Stützrolle (2) in Richtung der Referenzposition belastet.

4. Wipphebelaktor nach Anspruch 3, **dadurch gekennzeichnet, dass** die Rücktriebskraft (FR) im Bereich der Referenzposition größer ist als im restlichen Bewegungsbereich der Stützrolle (2).

5. Wipphebelaktor nach einem der Ansprüche 1 bis 4, **dadurch gekennzeichnet, dass** der Betätigungshebel (1) mit einer Montage- und/oder Transportsicherungseinrichtung derart versehen ist, dass der Betätigungshebel (1) ohne die Gegenkraft (FKu) von der Kupplung fixiert und damit nicht verschwenkbar festgelegt ist.

6. Wipphebelaktor nach Anspruch 5, **dadurch gekennzeichnet, dass** die Montage- und/oder Transportsicherung in Form eines Sperr- oder Riegelelements ausgebildet ist.

7. Wipphebelaktor nach Anspruch 5, **dadurch gekennzeichnet, dass** die Montage- und/oder Transportsicherung in Form eines Anschlages ausgebildet ist.

8. Wipphebelaktor nach Anspruch 5, **dadurch gekennzeichnet, dass** die Montage- und/oder Transportsicherung in Form einer Verlängerung des Betätigungshebels (1) ausgebildet ist.

9. Wipphebelaktor nach Anspruch 5, **dadurch gekennzeichnet, dass** die Montage- und/oder Transportsicherung derart ausgebildet ist, dass die Stützrolle (2) nach außerhalb des eigentlichen Arbeitsbereichs in eine Transportstellung verfahren ist und dann der Betätigungshebel (1) fixiert ist.

## Claims

1. Rocker lever actuator for activating a clutch of a vehicle, having at least one activating lever (1) which exerts a variable activating force for opening and/or closing the clutch and which can be acted on by means of a spring, with it being possible for a lever fulcrum point, which is defined by at least one support roller (2), of the activating lever (1) to be moved by means of an electric motor, and with the activating lever (1) having a rocker curve contour (4) by means of which said activating lever (1) is in contact with the surface of the support roller (2) at the lever fulcrum point, **characterized in that** the rocker curve contour has a reference position such that, when the electric motor is not supplied with current, the lever fulcrum point is automatically returned to the reference position.

2. Rocker lever actuator according to Claim 1, **characterized in that** stable positioning of the support roller (2) in the reference position is generated by means of the design of the rocker curve contour (4).

3. Rocker lever actuator according to Claim 1, **characterized in that** a restoring force (FR) on the support roller (2), which restoring force (FR) loads the support roller (2) in the direction of the reference position, is generated by means of the design of the rocker curve contour (4).

4. Rocker lever actuator according to Claim 3, **characterized in that** the restoring force (FR) is greater in the region of the reference position than in the rest of the range of movement of the support roller (2).

5. Rocker lever actuator according to one of Claims 1 to 4, **characterized in that** the activating lever (1) is provided with an assembly and/or transport securing device, in such a way that the activating lever (1) is fixed, and thereby fixed in a non-pivotable fashion, without the counteracting force (FKu) from the clutch.

6. Rocker lever actuator according to Claim 5, **characterized in that** the assembly and/or transport securing facility is designed in the form of a blocking or locking element.

7. Rocker lever actuator according to Claim 5, **characterized in that** the assembly and/or transport securing facility is designed in the form of a stop.

8. Rocker lever actuator according to Claim 5, **characterized in that** the assembly and/or transport securing facility is designed in the form of an elongation of the activating lever (1).

9. Rocker lever actuator according to Claim 5, **characterized in that** the assembly and/or transport securing facility is designed such that the support roller (2) is moved into a transport position outside the actual working region and the activating lever (1) is then fixed.

## Revendications

1. Actionneur de levier basculant pour l'actionnement d'un embrayage d'un véhicule comprenant au moins un levier d'actionnement (1) exerçant une force d'actionnement variable pour ouvrir et/ou fermer l'embrayage, lequel peut être sollicité au moyen d'un ressort, un centre de rotation du levier d'actionnement (1) défini au moyen d'au moins un galet de support (2) pouvant être déplacé au moyen d'un moteur électrique et le levier d'actionnement (1) présentant un contour de came de basculement (4) avec lequel il est en contact avec la surface du galet de support (2) au centre de rotation du levier, **caractérisé en ce que** le contour de came de basculement présente une position de référence de sorte que lorsque le moteur électrique n'est pas alimenté en courant, il se produise un rappel automatique du centre de rotation du levier dans la position de référence.

2. Actionneur de levier basculant selon la revendication 1, **caractérisé en ce que** l'on obtient un positionnement stable du galet de support (2) dans la position de référence par la réalisation du contour de came de basculement (4).

3. Actionneur de levier basculant selon la revendication 1, **caractérisé en ce qu'**une force de rappel (FR) est produite sur le galet de support (2) par la réalisation du contour de came de basculement (4), laquelle sollicite le galet de support (2) dans la direction de la position de référence.

4. Actionneur de levier basculant selon la revendication 3, **caractérisé en ce que** la force de rappel (FR) dans la région de la position de référence est plus importante que dans la zone de déplacement restante du galet de support (2).

5. Actionneur de levier basculant selon l'une quelconque des revendications 1 à 4, **caractérisé en ce que** le levier d'actionnement (1) est pourvu d'un dispositif de fixation de montage et/ou de transport de telle sorte que le levier d'actionnement (1) soit fixé sans la force opposée (FKu) de l'embrayage et soit donc fixé de manière non pivotante.

6. Actionneur de levier basculant selon la revendication 5, **caractérisé en ce que** la fixation de montage et/ou de transport est réalisée sous la forme d'un élément de blocage ou de verrouillage.

7. Actionneur de levier basculant selon la revendication 5, **caractérisé en ce que** la fixation de montage et/ou de transport est réalisée sous la forme d'une butée.

8. Actionneur de levier basculant selon la revendication 5, **caractérisé en ce que** la fixation de montage et/ou de transport est réalisée sous la forme d'une prolongation du levier d'actionnement (1).

9. Actionneur de levier basculant selon la revendication 5, **caractérisé en ce que** la fixation de montage et/ou de transport est réalisée de telle sorte que le galet de support (2) soit déplacé vers l'extérieur de la région de travail proprement dite dans une position de transport et qu'ensuite le levier d'actionnement (1) soit fixé.
